# EUROPEAN PATENT APPLICATION

(11) **EP 2 341 225 A1**
(43) Date of publication of application: **06.07.2011**
(21) Application number: 09180654.7
(22) Date of filing: 23.12.2009
(51) Int. Cl.: F02B 37/013, F02B 37/16, F02B 37/18, F02B 39/08, F02D 23/00

(54) **Method for controlling a turbocompound engine apparatus**

(71) Applicant: Iveco Motorenforschung AG, 9320 Arbon (CH)
(72) Inventor: Jaeger, Laurentius, 8048, Zürich (CH)
(74) Representative: Borsano, Corrado

(57) **Abstract**

The present invention relates to a method for controlling a turbocompound engine apparatus in particular for an industrial vehicle, but also for other transport means such as, for example, a ship. In particular the method can be performed on an engine apparatus comprising an engine, a turbo-charging unit, a compound turbocharging unit and a fluid coupling which connects a turbine and a supercharger of the compound unit to the engine crankshaft. The method comprises the step of deactivating/activating the fluid coupling in function of operative conditions of engine apparatus e.g. boost conditions and exhaust gas conditions.

## Description

### Field of the invention

The present invention relates to a method for controlling a turbocompound engine apparatus in particular for an industrial vehicle, but also for other transport means such as, for example, a ship.

### Description of the prior art

Two-stage turbocharging has been proposed as a means of achieving high efficiency in engines, in particular heavy duty diesel engines, such as those for industrial vehicles or ships. Two superchargers are placed in series on the engine intake line, driven by turbines placed on the exhaust line, which can also be placed in series, or arranged in another way. Two-stage turbocharging enables cooling to be performed between the two stages of compression in a specific intercooler, which increases overall engine efficiency.

In other engines, otherwise wasted energy from the exhaust gases is recuperated by a low pressure turbine (LP-turbine) and is transmitted to the drive shaft via a mechanical link between this LP-turbine and the drive shaft. The mechanical link usually ensures an adequate velocity ratio between the rotation of the LP-turbine and that of the engine, said ratio being more than 10, given the machine's characteristics. Said mechanical link usually comprises a system, which can be a viscous coupling element, to reduce the variations in the rotational speed. The LP-turbine is usually placed downstream with respect to a high pressure turbine (HP-turbine) suitable to drive a high pressure supercharger; the turbines (HP and LP) are sometimes arranged in parallel and sometimes in series. These engines, known as turbocompound engines, are high performance engines, especially in terms of efficiency.

Turbocompound engines have some drawbacks. In certain operating conditions the rotating power turbine generates losses only, that could be minimitzed by decoupling it from the drive shaft. In specific layouts of turbocompound engines, where there is not only a turbine, but also a compressor coupled to the drive shaft, the activation/deactivation of the viscous coupling element is not performed taking into account the multiple operative conditions. In particular the known control methods of these engines do not allow to optimize the energy flows between compound turbine, compound compressor and drivetrain. It is desirable to connect and disconnect on purpose the energy transfer by the compressor to the intake air from its two possible energy sources, namely the compound turbine and the drivetrain itself. It may as well be desirable to reduce the rotating speed of the turbine up to disconnecting it from the drivetrain, to improve the overall engine efficiency, increase or reduce the drivetrain power or to ensure mechanical integrity.

Consequently it would be desirable to produce a turbocompound engine whereby the fluid coupling can be controlled in function of the operative condition in order to improve the efficiency, performance and operating limits of the engine apparatus.

### SUMMARY

Therefore it is the main object of the present invention to provide a method for controlling a turbocompound engine apparatus which overcomes the above drawbacks. Within this aim a first purpose of the present invention is to provide a method which allows the control of the fluid coupling of a turbocompound engine. Other purpose of the present invention is to provide a method for controlling a turbocompound engine apparatus which is highly reliable and relatively easy to produce at competitive costs.

These and further objectives are achieved by means of a method as described in the attached claims, which form an integral part of the present description. In particular the method according to the invention allow to control an engine apparatus comprising:
- an internal combustion engine, in particular a diesel engine, having an air intake line and a exhaust line;
- a first supercharger arranged on said intake line;
- a first turbine arranged on said exhaust line suitable to drive said first supercharger;
- a second turbine arranged on said exhaust line suitable to supply mechanical energy to said engine;
- a second supercharger arranged on said intake line suitable to receive mechanical energy from said engine and/or from said second turbine;
- a mechanical link between the engine crankshaft an the second turbine and the second supercharger, said link comprising fluid coupling which can activated/disactivated so as to connect/disconnect the second turbine and the second supercharger to/from the engine crankshaft.

The method according to the invention comprises the step of activating and deactivating the fluid coupling when the energy input from one of the turbine to the corresponding supercharger is enough to:
- meet a boost pressure target; or
- meet a lambda (air to fuel ratio) target; or
- avoid to fall short of or to exceed a pre-established exhaust gas temperature.

The main advantages of the method is that the activation/deactivation of the fluid coupling is performed in function of the operative conditions of the engine apparatus, as described here further.

### Brief description of the drawings

The invention will become fully clear from the following detailed description, given by way of a mere exemplifying and non limiting example, to be read with reference to the attached figure a, which shows a block diagram of a turbocompound engine apparatus controllable by the method according to the present invention.

### Detailed description of the preferred embodiments

Figure is a schematic illustrations of an engine apparatus which can be controlled by the method according to the present invention. The engine apparatus, for example of an industrial vehicle, of a ship or of another type, comprises an internal combustion engine 1, which can be a diesel engine. Said engine 1 has an intake line 2 and an exhaust line 3. A turbo-charging unit 4 comprises a first turbo-supercharger 5, driven by a first turbine 6. The first turbine 6 uses the energy of the exhaust gases and can be of a type that is commonly used. The first turbine can be, for example, a twin scroll turbine, of the type commonly used to exploit the pressure waves normally present in the exhaust line of a reciprocating engine. Other types of turbine can be chosen, including variable geometry turbines,.

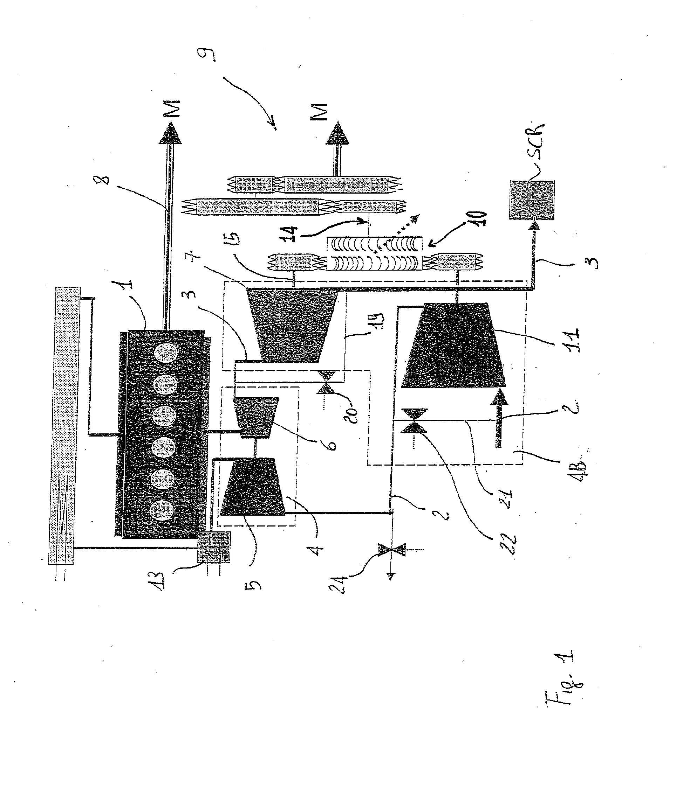

The engine apparatus also comprises a unit 4B comprising a second turbine 7 (indicated also with LP turbine) arranged on the exhaust line 3 and a second supercharger 11 on the intake line 2. In the embodiment shown in figure 1, the second turbine 7 is placed in series to the first turbine 6 and in particular downstream the latter. Both the turbine 6,7 intercept the entire exhaust gas flow. The second supercharger 11 is placed in this drawing upstream the first supercharger 5 and constitutes a first compression stage. The engine apparatus also comprises an aftercooler 13 placed downstream of the supercharger 5 to increase efficiency and reduce the volume of air. In this regard also an intercooler placed between the two superchargers 11, 4 could be provided.

The second turbine 7 and the second turbocharger 11 are connected to the engine crankshaft 8 by means of a mechanical link 9 that can comprise a series of gear drives, belt drives or drives of any other suitable type. The mechanical link 9 comprises fluid coupling 10 of a known type, placed between the components (second turbine 7 and second supercharger 11) of the unit 4B and the engine crankshaft 8. In particular the fluid coupling 10 can be activated/deactivated so as to connect/disconnect the unit 4B to/from the engine crankshaft 8. In other words, when the fluid coupling 10 is activated the second turbine 7 and the second supercharger 11 are operatively connected to the engine crankshaft 8. Instead when the fluid coupling 10 is deactivated the engine crankshaft 8 is dynamically insulated from the unit 4B and no motion can be transferred from/to the engine crankshaft 8 to/from the second turbine 7 and/or the second supercharger 11.

The ratio between the rotational speed of the engine crankshaft 8 and the second turbine 7, and engine crankshaft 8 and second supercharger 11 (in particular if said second supercharger 11 is a turbo-supercharger) can be variable, in order to guarantee an optimum speed thereof and protect them from being driven at excessively high speeds, for example in case of the engine reaching high speeds in low gear during downhill braking. In this regard, an appropriate mechanism can be inserted in the point 14 or in another appropriate point of the link 9. The mechanism can be, for example, an epicycloid gear, more preferably supported by an electric motor to deliver continuous ratio variation; similar mechanisms are known for varying velocity ratios. The ratio between the second turbine and supercharger can be fixed. Alternatively a ratio varying mechanism can also be provided that only acts for the turbine or supercharger (arranged for example on the respective shaft 15 or 16) or a mechanism can be provided for each. This would enable the torque absorbed or delivered or the flow rate through each turbo-supercharger to be regulated and would also allow the latter to idle and could also entirely or partially eliminate the need for control means such as throttle valves or by-passes for said turbosupercharger.

The energy of the second turbine 7 is controlled by regulating (continuously or in on/off manner) a by-pass 19 of the second turbine 7. Said regulation can be performed by acting on a relative control valve 20. In particular the flow through the by-pass 19 can be activated when the energy that drives the second supercharger 11 comes from the power train only in engine brake mode. On the contrary said flow through the by-pass 19 is stopped when the energy that drives the second supercharger 11 comes from the exhaust gas flow only.

The engine apparatus can comprises also a by-pass 21 of the second supercharger 11 with a relative control valve 22. In detail the latter regulates the flow of boost air through the second supercharger 11. In detail the flow through the by-pass 21 is activated when the boost of the other supercharger 4 satisfies the engine air demand. In this way the energy from the second turbine 7 is directed to the engine crankshaft 8. The flow through the by pass 21 can be activated to limit the pressure ratio of the second supercharger 11 in order to avoid too low exhaust gas temperatures in the engine aftertreatment system (e.g. SCR).

The engine apparatus shown in figure 1 also comprises a blow-off valve 24 on the intake line 2 between the first 5 and the second supercharger 11. More in detail the blow-off valve 24 regulates the boost air directed to the first supercharger 5. Preferably, in engine brake mode, the blow-off valve 24 redirects excessive boost produced by the second supercharger 11 out of the engine intake line 2. It can be activated/deactivated continuously or in on/off manner in function of the boost pressure.

The method according to the present invention allows to control the connection between the engine crank shaft 8 and the components of unit 4B (second turbine 7 and second supercharger 11) in function of the operative conditions of engine. In particular the method comprises the step of deactivating the fluid coupling when the energy input from one of the turbine 6,7 to the corresponding supercharger 5,11 is enough to:
- meet a pre-established boost pressure target; or
   - meet a lambda (air to fuel ratio) target; or
   - avoid to fall short of or to exceed a pre-established exhaust gas temperature.

In particular when the energy input from the first turbine 6 to the first supercharger 5 (or when the energy input from the second turbine 7 to the second supercharge 11) is enough to meet a boost pressure target, then the fluid coupling 10 is deactivated.

At the same time, when said energy input is enough to meet a lambda target, then the fluid coupling 10 is deactivated. Moreover according to the method of the present invention, when said energy input is enough to avoid to exceed or to fall short of a pre-established exhaust gas temperature, then the fluid coupling 10 is deactivated.

The method according to the present invention preferably comprises also the step of deactivating the fluid coupling 10 when the apparatus engine achieves a first operative condition for which the second supercharger 11 would consume, in connection mode, more energy than that which is available for recycling at the second turbine 7. This control step allows to optimize the engine energy efficency in steady-state operation, while still allowing to produce additional boost, even in an inefficent way, when the rapid building up of boost is necessary for fast load response of the engine, as described in the next paragraph.

Preferably, the method according to the invention also comprises the step of activating the fluid coupling 10 when the apparatus engine achieves a second operative condition for which the rotational speed of the second turbine 7, obtained from the exhaust gas, is lower than that which could be imparted by the engine crankshaft 8.

According to a further aspect of the present invention, the method also comprises the step of activating the fluid coupling 10 when engine apparatus achieves a operative condition corresponding to an engine brake mode. This further control step allows to waste energy from the drivetrain by compressing intake air. It also avoids any unwanted transfer of exhaust gas energy to the drivetrain in engine brake mode.

According to a further aspect of the present invention, the method also comprises the step of deactivating the fluid coupling when the apparatus approaches a further operative condition corresponding to turbine and/or compressor overspeed.

The present invention is also relative to a engine apparatus which can be controlled by a control method according to the present invention. In particular the engine apparatus comprises:
- an internal combustion engine 1, having an air intake line 2 and a exhaust line 3;
- a turbo-supercharger 5 arranged on said intake line;
- a turbine 6 arranged on said exhaust line suitable to drive said first turbosupercharger;
- a second turbine 7 arranged on said exhaust line suitable to supply mechanical energy to said engine;
- a second supercharger 11 arranged on said intake line suitable to receive mechanical energy from said engine and/or from said second turbine,
- a mechanical link between the engine crankshaft 8 and said second turbine 7 an said second supercharger 11, said mechanical link comprising a fluid coupling which can be activated/deactivated so as to connect/disconnect said second turbine 7 and said second supercharger 11 to/from said engine crankshaft.

The engine apparatus according to the present invention is characterized in that it comprises control means for activating/deactivating the fluid coupling 10 according to the method above indicated.

The invention also relates to a vehicle provided with the engine apparatus as described above.

The present invention introduces some considerable advantages. The fluid coupling is controlled in function of the operative conditions of the engine apparatus and in particular in function of boost pressure conditions and exhaust gas conditions. Moreover the fluid coupling is advantageously controlled in function of the engine operation mode e.g. brake mode or fired mode, stable or fast transient operation in order to optimize the powertrain efficiency, performance, driveability and durability.

Many changes, modifications, variations and other uses and applications of the subject invention will become apparent to those skilled in the art after considering the specification and the accompanying drawings which disclose preferred embodiments thereof. All such changes, modifications, variations and other uses and applications which do not depart from the spirit and scope of the invention are deemed to be covered by this invention.

Further implementation details will not be described, as the man skilled in the art is able to carry out the invention starting from the teaching of the above description.

## Claims

1. Method for controlling a turbocompound engine apparatus which comprises:
- an internal combustion engine (1), having an air intake line (2) and a exhaust line (3);
- a first turbosupercharger (5) arranged on said intake line;
- a first turbine (6) arranged on said exhaust line suitable to drive said first turbosupercharger;
- a second turbine (7) arranged on said exhaust line suitable to supply mechanical energy to said engine;
- a second supercharger (11) arranged on said intake line suitable to receive mechanical energy from said engine and/or from said second turbine,
- a mechanical link between the engine crankshaft (8) (1) and said second turbine (7) an said second supercharger (11), said mechanical link comprising a fluid coupling which can activated/deactivated so as to connect/disconnect said second turbine (7) and said second supercharger (11) to/from said engine crankshaft, wherein said method comprises the step of deactivating said fluid coupling when the energy input from the first (6) and/or the second turbine (7) to the first (5) and/or the second supercharger (11) is enough to:
- meet a pre-established air pressure target; or
- meet a lambda target; or
- meet a pre-established exhaust gas temperature target.

2. Method according to claim 1, wherein said method comprises the step of deactivating said fluid coupling when the apparatus achieves a first operative condition for which the second supercharger (11) would consume, in connection mode, more energy than that is available for recycling at the second turbine (7).

3. Method according to claim 1 or 2, wherein said method comprises the step of activating said fluid coupling when the apparatus achieves a second operative condition for which the rotational speed of the second turbine (7) obtained from the exhaust gas would be lower than the one that could be imparted by the engine crankshaft.

4. Method according to any one of the claims 1 to 3, wherein said method comprises the step of activating said fluid coupling when the apparatus achieves a further operative condition corresponding to a engine brake mode.

5. Method according to any one of the claims 1 to 4, wherein said method comprises the step of deactivating said fluid coupling when the apparatus aproaches a further operative condition corresponding to turbine and or compressor overspeed.

6. Method according to any one of claims 1 to 5, wherein said method comprises the step of activating said fluid coupling (10) continuously or in on/off manner.

7. Engine apparatus comprising:
- an internal combustion engine (1), having an air intake line (2) and a exhaust line (3);
- a first supercharger (5) arranged on said intake line;
- a first turbine (6) arranged on said exhaust line suitable to drive said first supercharger;
- a second turbine (7) arranged on said exhaust line suitable to supply mechanical energy to said engine;
- a second supercharger (11) arranged on said intake line suitable to receive mechanical energy from said engine and/or from said second turbine,
- a mechanical link between the engine crankshaft (8) (1) and said second turbine (7) an said second supercharger (11), said mechanical link comprising a fluid coupling which can be activated/deactivated so as to connect/disconnect said second turbine (7) and said second supercharger (11) to/from said engine crankshaft, wherein said engine apparatus comprises control means suitable to perform the method according to any of the claims 1 to 6.

8. Vehicle, in particular an industrial vehicle provided with the engine apparatus according to claim 7.

## Amended claims

### Amended claims in accordance with Rule 137(2) EPC.

**1.** Method for controlling a turbocompound engine apparatus which comprises:
- an internal combustion engine (1), having an air intake line (2) and a exhaust line (3);
- a first turbosupercharger (5) arranged on said intake line;
- a first turbine (6) arranged on said exhaust line suitable to drive said first turbosupercharger;
- a second turbine (7) arranged on said exhaust line suitable to supply mechanical energy to said engine;
- a second supercharger (11) arranged on said intake line suitable to receive mechanical energy from said engine and/or from said second turbine,
- a mechanical link between the engine crankshaft (8) (1) and said second turbine (7) an said second supercharger (11), said mechanical link comprising a fluid coupling which can activated/deactivated so as to connect/disconnect said second turbine (7) and said second supercharger (11) to/from said engine crankshaft,
- wherein said method comprises a first step of measuring the temperature in the exhaust gas and a second step of deactivating said fluid coupling when the energy input from the first (6) and/or the second turbine (7) to the first (5) and/or the second supercharger (11) is enough to meet a pre-established exhaust gas temperature target.

**2.** Method according to claim 1, wherein said method comprises the step of deactivating said fluid coupling when the apparatus achieves a first operative condition for which the second supercharger (11) would consume, in connection mode, more energy than that is available for recycling at the second turbine (7).

**3.** Method according to claim 1 or 2, wherein said method comprises the step of activating said fluid coupling when the apparatus achieves a second operative condition for which the rotational speed of the second turbine (7) obtained from the exhaust gas would be lower than the one that could be imparted by the engine crankshaft.

**4.** Method according to any one of the claims 1 to 3, wherein said method comprises the step of activating said fluid coupling when the apparatus achieves a further operative condition corresponding to a engine brake mode.

**5.** Method according to any one of the claims 1 to 4, wherein said method comprises the step of deactivating said fluid coupling when the apparatus aproaches a further operative condition corresponding to turbine and or compressor overspeed.

**6.** Method according to any one of claims 1 to 5, wherein said method comprises the step of activating said fluid coupling (10) continuously or in on/off manner.

**7.** Engine apparatus comprising:
- an internal combustion engine (1), having an air intake line (2) and a exhaust line (3);
- a first supercharger (5) arranged on said intake line;
- a first turbine (6) arranged on said exhaust line suitable to drive said first supercharger;
- a second turbine (7) arranged on said exhaust line suitable to supply mechanical energy to said engine;
- a second supercharger (11) arranged on said intake line suitable to receive mechanical energy from said engine and/or from said second turbine,
- a mechanical link between the engine crankshaft (8) (1) and said second turbine (7) an said second supercharger (11), said mechanical link comprising a fluid coupling which can be activated/deactivated so as to connect/disconnect said second turbine (7) and said second supercharger (11) to/from said engine crankshaft,
wherein said engine apparatus comprises control means suitable to perform the method according to any of the claims 1 to 6.

**8.** Vehicle, in particular an industrial vehicle provided with the engine apparatus according to claim 7.
